Europäisches Patentamt

(19) European Patent Office

Office européen des brevets

(11) EP 0 802 406 A2

(12) EUROPEAN PATENT APPLICATION

(43) Date of publication:
22.10.1997 Bulletin 1997/43

(51) Int. Cl.6: G01N 21/00

(21) Application number: 97105911.8

(22) Date of filing: 10.04.1997

(84) Designated Contracting States:
DE FR GB

(30) Priority: 16.04.1996 US 633056

(71) Applicant: Kurtyka, Bogdan
Arling, Virginia 22207 (US)

(72) Inventor: Kurtyka, Bogdan
Arling, Virginia 22207 (US)

(74) Representative:
DIEHL GLAESER HILTL & PARTNER
Patentanwälte
Königstrasse 28
22767 Hamburg (DE)

(54) **System for matching absorbance spectra employing a library stabilization algorithm**

(57) In a method of matching a known product with one of a library of known products, training sets of the absorbance spectra of the known products are measured and stored. The training sets of the known products are used to determine an expanded standard deviation spectrum for each known product wherein the expanded standard deviation spectrum combines the training set of spectra with shift replicated spectra into expanded training sets of spectra. The absorbance spectrum of the unknown product is measured and the distance of the spectrum of the unknown product from the expanded training sets of spectra is determined by dividing the values of the expanded standard deviation spectra into the difference between the absorbance spectrum of the unknown product and the mean spectrum of the training set.

## FIG. 1

EP 0 802 406 A2

## Description

### Background of the Invention

This invention relates to a system for identifying unknown materials by infrared analysis and more particularly to a method and apparatus for identifying materials by matching near infrared absorbance spectrum of the unknown material with a library of absorbance spectra of known materials.

In industry, there is a need to be able to accurately identify unknown materials without having to subject the unknown material to chemical analysis. One effective method of making such an identification is by measuring the absorbance spectrum of the unknown material in the near infrared and comparing the spectrum of the unknown material with a library of spectra of known materials. An identification is made when the spectrum of the unknown material is determined to match the spectrum of a known material in the library.

Different samples of the same material will not have exactly the same absorbance spectra; there will be minor variations in the spectra from the different samples throughout the near infrared range. These differences occur because the samples come from different manufacturers, because they are made by different processes and because of variations in impurities in the different samples of the material, or because of a combination of one or more of these factors. Usually, the different known materials are each represented in the library by many different spectra, each obtained from a different sample of the material. The set of spectra obtained from the different samples of a known product is called a "training set". From the training set of spectra, a mean absorbance value is determined at each incremental wavelength throughout the near infrared range and a standard deviation is determined at each wavelength from the family of spectra. The unknown material is compared with the training set of spectra of a known material by what is known as the conformity index. To determine the conformity index, the mean spectrum of the known product being matched is subtracted from the spectrum of the unknown material at each incremental wavelength and the resulting differences are divided by the standard deviation values weighted by a factor varying with the number of samples. This weighted quotient is determined at each incremental wavelength. The maximum value of this quotient is referred to as the distance of the unknown spectrum from the known product spectra and constitutes the conformity index of the unknown product relative to the known product. If this distance is less than a predetermined value, the unknown product is determined to match the product represented by the training set of spectra.

This method of matching the unknown product with the products represented in the library is convenient and is sensitive to various amounts of contaminants in products, but it has a significant disadvantage. The calculated standard deviation spectrum may contain points of very low values. When the training set of spectra is represented by a first or second differential of the original measurement of the absorbance spectra, the presence of very low values is to be expected, the points of very low value corresponding to regions where the sample spectra cross zero. As a result, the distance is often found falsely high because the standard deviation in the denominator of the quotient used to determine the distance has a very low value at some of the wavelengths of the spectrum. The problem is even more acute when the library of spectra of known products is obtained by a different instrument than is measuring the unknown product. An identical spectra measured by two different monochromators can be shifted by a fraction of a nanometer thus causing the zero crossings to occur in different places on the spectrum. As a result, false negatives (indicating falsely that unknown material doesn't match a given known material) are frequently obtained.

### Summary of the Invention

The present invention is based on the concept of shift replicating all the spectra in the library, that is, generating a spectrum shifted higher and a spectrum shifted lower by a predetermined fraction of an increment from each measured spectrum of a training set and adding the shift replicated spectra to the training set representing the product in the library. The result of such operation with n spectra in a training set to start with would be an expanded set of 3n spectra for each known product. A standard deviation spectrum calculated from an expanded set of such spectra is called an expanded standard deviation spectrum. An expanded standard deviation spectrum calculated as described above would not have any very low values and would overcome the above-described problem. This method, while effective, also has disadvantages. An absorbance spectrum cannot be easily shifted by a fraction of a nanometer. The shift replicated spectra have to be calculated by the interpolation of the parent spectrum. The process is computationally expensive and is not exact and an amount of uncertainty is introduced into the data depending upon the interpolation method selected. Also increasing the number of spectra by a factor of 3 takes up storage space and decreases the number of products and/or the number of spectra per product that can be stored in the library.

The preferred embodiment of the invention in effect achieves the effect of using shift replicated spectra without the above-described disadvantages.

In accordance with the invention, an algorithm has been developed which determines an expanded standard deviation spectrum wherein the sum of the squares used in the standard deviation calculation is determined from an algebraic expression which includes values for shift replications of each spectrum in a training set of spectra. In this manner, an expanded standard deviation is computed at each wavelength which is equivalent to computing the standard deviation based on the original training set of spectra plus two additional shift replicated spectra, one shifted in the positive direction from the original spectra and one shifted in the negative direction. The algorithm avoids the necessity of calculating the shifted spectra by interpolation and the necessity of storing the shift replicated spectra in the memory. With the expanded standard deviation spectrum, the very low values of standard deviation are eliminated and, accordingly, false negatives in the match determination are avoided.

### Brief Description of the Drawings

Fig. 1 illustrates the instrument of the invention used to carry out the method of the invention;
Fig. 2 is a flow chart illustrating the method of the invention.

### Description of the Preferred Embodiment

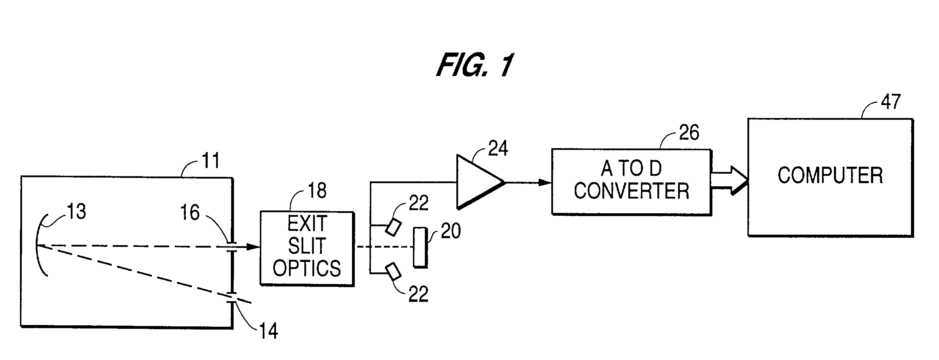

The system of the present invention makes use of a spectrophotometer as shown in Fig. 1. This spectrophotometer, which may be like that disclosed in U.S. Patent No,. 4,969,739, has a reflecting grating 13 mounted for oscillation within a spectrophotometer chamber 11. The grating receives light through an entrance slit 14 and reflects and disperses the received light into a spectrum extending over an exit slit 16 through which a narrow wavelength band of the spectrum passes. As the grating oscillates, the wavelength of narrow band passing through the exit slit is scanned through the spectrum. The light passing through the exit slit is received by exit slit optics 18 and directed onto a sample 20 to be analyzed. Light reflected from the sample 20 is detected by photodetectors 22, which generate an output signal corresponding to the intensity of reflection from the sample at the wavelength currently being transmitted through the exit slit. The photodetector output signal is amplified by an amplifier 24 and successive samples of the amplifier output signal are converted to digital values by an analog-to-digital converter 26, which applies digital values to a computer 47. In the computer, the digital values are analyzed to obtain an absorbance measurement at each of the incremental wavelengths throughout the near infrared spectrum. In this manner, an absorbance spectrum of a sample is obtained.

In accordance with the invention, absorbance spectra of many different known samples are measured by the spectrophotometer and stored by the computer 47 in a memory to provide a library of absorbance spectra for known products. Each known product will be represented by a training set of spectra measured from different samples of the same product obtained from different manufacturers, or made by different manufacturing processes, or having different quantities and types of impurities, or a combination of these variations. The number of samples of each product must be at least three and preferably is at least 20 to obtain good results. In the conventional method of determining the conformity index, a mean value is determined from each training set at each incremental wavelength at which the absorbance spectra is measured. A first derivative of each absorbance spectra is usually determined and, in addition, a second derivative of each absorbance spectra may also be obtained. The original absorbance spectra as well as the first and second derivatives of the original absorbance spectra are all termed absorbance spectra. When the first or second derivative is determined, the mean value will be determined for the first derivative absorbance spectra or the second derivative absorbance spectra. The standard deviation at each incremental wavelength is determined for each training set of spectra. The equation for computing what is known as an "inflated" standard deviation $s_{jp}$ at a wavelength p for a known product j is

$$S_{jp} = \left\{ 1 + \frac{1}{\sqrt{2(n-1)}} \right\} \left( \frac{\sum\limits_{i} (y_{ip} - \bar{y}_p)^2}{n-1} \right)^{1/2} \qquad (1)$$

in which $y_{ip}$ is a value of the absorbance spectrum of member i of the training set at wavelength p, $\bar{y}_p$ is the mean value of the training set at the wavelength p and n is the number of spectra in the training set. The standard deviation is referred to as inflated because it is multiplied by the factor

$$\left\{ 1 + \frac{1}{\sqrt{2(n-1)}} \right\}$$

which makes the inflated standard deviation larger for a fewer number of samples. A common and convenient method of determining whether or not an unknown product matches a known product is the conformity index method. The conformity index is measured by measuring the difference between the absorbance of the unknown product at each wavelength and the mean absorbance of the training set at such wavelength and dividing the resulting difference by the inflated standard deviation at each wavelength calculated in accordance with equation (1). It is not necessary for the inflation factor to be used to calculate the standard deviation, and the conformity index may be calculated using either the normal standard deviation or the inflated standard deviation. The phrase "standard deviation" as used herein refers to the calculation both with and without the inflation factor. The maximum value of the quotient representing the conformity index and as represented by equation (2) below is an indication of how well the spectrum of the unknown product matches the known product represented by the family of spectra.

$$d_{uj} = \max \left[ > abs\left( \frac{y_{up} - \bar{y}_{jp}}{S_{jp}} \right) \right]_{over\ all\ p} \qquad (2)$$

in which $y_{up}$ is the absorbance value of the unknown product at wavelength p and $\bar{y}_{jp}$ is the mean value of the absorbance of product j at wavelength p. The maximum value represented by Equation (2) is referred to as the distance between the unknown spectrum and the training set of spectra of the known product.

If the distance determined by equation (2) is large, this indicates that the unknown product does not match the known product. On the other hand, if the distance determined by Equation (2) is small, then this indicates that the unknown product is the same as the product represented by the training set of spectra.

The above method of identifying an unknown product has a disadvantage because the standard deviation $s_{jp}$ determined by Equation (1) often contains points of very low magnitude. These points are likely to occur where the family of spectra representing a known product cross zero. While this phenomena occurs commonly in the first and second derivatives, it is also possible for it to occur in the original absorbance spectra data. As indicated in the formula for measuring the distance represented by Equation (2), the value of $s_{jp}$ appears in the denominator of the ratio:

$$\frac{y_{up} - \bar{y}_{jp}}{S_{jp}}$$

Because the denominator $s_{jp}$ of equation (2) may have a very small or near zero value, the distance measured by equation (2) may be artificially high and thus falsely indicate a lack of match even though the unknown product matches the known product. This false indication, called a false negative, is particularly likely to occur when the instrument measuring the unknown product is a different instrument than that which was used to measure the spectra of the library of products. This error occurs because from instrument to instrument there is likely to be a slight shift in wavelength, wherein the unknown product measuring instrument will have a zero crossings in slightly different locations than the zero crossings of the library spectra. Under these circumstances, a large quotient will be determined by equation (2) and result in a false negative.

To solve this problem, the system and method of the present invention in effect computes an expanded standard deviation not just from a training set of spectra representing a known product, but from an expanded set of spectra including the original training set of spectra combined with two shift replicated spectra. One shift replicated set of spectra will be identical to the spectra of the training set in shape, but shifted by a predetermined fraction of a nanometer in one direction relative to the original spectra of the training set in the library and a second set of shift replicated spectra will also be identical to the original spectra of the training set in shape but shifted a fraction of a wavelength in the other direction from the original spectra of the training set. In accordance with the invention, these additional shift replicated spectra are combined with the original training set to provide an expanded training set of spectra for the known product and the expanded standard deviation is computed from the expanded training set. As a result, there will be three times as many spectra included in the sum of the squares of the differences represented in the numerator of equation (1); that is there will be 3n spectra instead of n spectra. One way to accomplish the computation of the expanded standard deviation is to generate and store the wave shifted absorbance spectra along with the original training set of spectra in the memory. Then the expanded standard deviation can be computed in accordance with Equation (1) from the expanded training set. The use of the shift replicated absorbance spectra in computing the standard deviation results in the absorbance spectra crossing zero in slightly different places and, as a result, the expanded standard deviation does not exhibit near zero values. As a result, when the distance is computed in accordance with Equation (2), false negatives are avoided. The distance computed in this manner may be considered to be the distance between the unknown spectrum and the expanded set of spectrum.

As indicated above, the above method solves the problem of false negatives but it has its own disadvantages. Specifically, because each absorbance spectra is represented by a measurement of incremental wavelengths which are normally in about 2 nanometer increments and the shift replicated absorbance spectra are shifted a fraction of a wavelength, the shift replicated spectra has to be calculated by interpolation of the original spectra. This process requires substantial computation making it expensive and it is not exact. In addition, increasing the number of spectra in the library by a factor of 3 decreases the allowed number of known products which can be stored in the library and/or the number of spectra per product.

These problems with the above-described method are avoided in the preferred embodiment of the invention wherein the shift replicated spectra are incorporated into the calculation of the expanded standard deviation in a more direct and precise way without requiring calculation of the shift replicated absorbance spectra and without requiring an increase in the data stored in the library. To explain the method of the preferred embodiment, the equation for the standard deviation is rewritten as follows:

$$S_{jp} = \left\{ 1 + \frac{1}{\sqrt{2(n-1)}} \right\} \left( \frac{\sum_i y_i^2 - n\bar{y}^2}{n-1} \right)^{1/2} \qquad (3)$$

As indicated above, shift replicating the spectra will increase the number of spectra in a training set by a factor of 3. On the other hand, the mean spectra $\bar{y}$ will not be changed. Accordingly, the second term in the numerator of Equation (3), $n\bar{y}^2$ becomes $3n\bar{y}^2$. With shift replication, the sum of the squares of the first term of the numerator in equation (3) corresponding to $y_i^2$, becomes:

$$(y-ab)^2 + y^2 + (y+ab)^2 = 3y^2 + 2a^2b^2 \qquad (4)$$

in which a is the fraction of the distance between data points by which a spectrum is shifted and b is the first derivative of the absorption spectrum at the wavelength of interest. Substituting the expression of Equation (4) for $y_i$ in Equation (3), the new expanded standard deviation becomes:

$$S_{jp} = \left\{ 1 + \frac{1}{\sqrt{2(n-1)}} \right\} \left( \frac{3\sum_i y_i^2 + 2a^2\sum_i b_i^2 - 3n\bar{y}^2}{3n-3} \right)^{1/2} \qquad (5)$$

The factor 3n - 3 in the denominator of Equation (5) replacing the factor n - 1 in Equation (3) results from the fact that there are 3n spectra included in the summation instead of n spectra and 3 degrees of freedom are lost because 3 parameters appear in the calculation of Equation (5). The derivative b in Equation (5) is determined at each wavelength increment by fitting 5 spectral points around the wavelength of interest to a parabola using the least squares method. The parabola equation is $Ax^2 + By + C$. The points taken for the fit of the parabola to the absorbance spectra are designated as -2, -1, 0, 1 and 2 wherein 0 is the wavelength of interest at which the derivative is being determined, the points -1 and -2, +1 and +2 being the two closest adjacent points at which measurements are taken. Since measurements are taken at two nanometer increments, the point -2 is four nanometers from the wavelength of interest in the minus direction and point -1 is two nanometers displaced from the wavelength of interest in the minus direction. Point +1 is displaced two nanometers in the plus direction from the wavelength of interest and the point +2 is displaced four nanometers in the plus direction from the wavelength of interest. The slope at the wavelength of interest is the factor b in Equation (6) and the slope b can be calculated as follows:

$$b = \frac{1}{10}(-2R_{-2} - R_{-1} + R_1 + 2R_2) \qquad (6)$$

The determination of the slope in this manner is explained in a text by M. A. Sharat, D. L. Illman and B. R. Kowalski entitled "Chemometrics", published by John Wiley & Sons, 1986, pp. 106 and 107. In Equation (6), $R_{-2}$ is the absorbance at point -2, $R_{-1}$ is the absorbance at the incremental wavelength point -1, $R_1$ is the absorbance at the incremental wavelength point +1 and $R_2$ is the wavelength at the incremental wavelength point +2. The number of points fitted to the parabola is chosen as 5 because the spectral range of over 5 points is 8 nanometers which is slightly less than the typical bandwidth. As a result, no peaks are lost to the smoothing effects of this method.

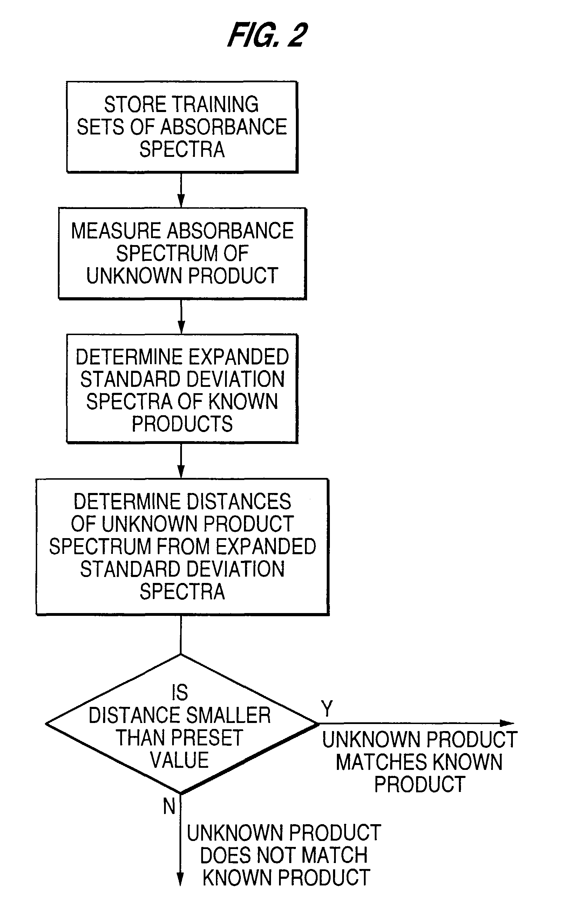

Thus, in accordance with the preferred embodiment of the invention, as represented in the flow chart of Fig. 2, training sets of absorbance spectra of several samples of each of a large number of known products are measured and stored as a library in the computer memory. To match an unknown product with one of these products of the library, the absorbance spectrum of a sample of the unknown product is measured. The spectra of the sample of the unknown product is then matched with the known products of the library by determining the expanded standard deviation spectra of the known products from the library of training sets of spectra. The distance of the unknown product from each training set of spectra is then determined in accordance with Equation (7) below:

$$d_{uj} = \max[abs(\frac{y_{up} - \bar{y}_{jp}}{s'_{jp}})] \qquad (7)$$

in which $s'_{jp}$ represents the expanded standard deviation calculated by equation (5). When the distance determined by Equation 7 is below a predetermined value, the sample of the unknown product is determined to match the corresponding known product. Because $s'_{jp}$ is unlikely to have very low values at any of the incremental wavelengths, the resulting conformity index calculation in accordance with equation (7) will result in much less likelihood of any false negatives being generated from a false indication of a large maximum value for the quotient of equation (5).

In the preferred embodiment as described above, an inflated expanded standard deviation is calculated. As indicated above, the conformity index may also be determined from the standard deviation without employing the inflation factor. The present invention is applicable to determining the conformity index both with and without the inflation factor.

As described above, the applicant's invention enables the instrument to perform the matching of unknown products with known product spectra in a more accurate manner greatly reducing the occurrence of false negatives.

**Claims**

1.  A method of determining whether an unknown product matches a known product comprising measuring a training set of absorbance spectra from a multiplicity of samples of the known product, determining an expanded standard deviation spectrum from said training set of spectra, said expanded standard deviation spectrum corresponding to a standard deviation spectrum determined from an expanded set of spectra comprising said training set of spectra and shift replicated spectra, said shift replicated spectra being the same shape as said training set of spectra, but shifted in wavelength from said training set of spectra, measuring the distance of said unknown spectrum from said expanded set of spectra, said distance being measured by determining at incremental wavelengths distributed over a wavelength range the difference between the absorbance spectrum of said unknown sample and the mean value of said training set of spectra and by determining the maximum value of the quotient of said difference at each incremental wavelength divided by the value of said expanded deviation spectrum over said wavelength range and deciding whether or not the unknown sample matches the known product by determining whether said distance is less than a predetermined value.

2.  A method comprising measuring training sets of absorbance spectra from a multiplicity of known products and storing a library of training sets for said known products and identifying an unknown product by performing the steps of claim 1 to determine whether or not a sample of the unknown product matches a known product of said library.

3.  A method as recited in claim 1, wherein the values of said expanded standard deviation spectrum are determined at each wavelength i from the expression:

$$\left( \frac{3\sum_i y_i^2 + 2a^2 \sum_i b_i^2 - 3n\bar{y}^2}{3n-3} \right)$$

in which $y_i$ represents the absorbance of one of the samples of the training set at wavelength i, a represents the amount of the wavelength shift of the shift replicated spectra from the training set and b represents the first derivative at the wavelength i, and $\bar{y}$ represents the mean value of the training set at the wavelength i, and n represents the number of spectra in the training set.

4.  A method as recited in claim 1, wherein said wavelength range includes the entire range of said training set of spectra.

FIG. 1

EP 0 802 406 A2

# FIG. 2

STORE TRAINING
SETS OF ABSORBANCE
SPECTRA

↓

MEASURE ABSORBANCE
SPECTRUM OF
UNKNOWN PRODUCT

↓

DETERMINE EXPANDED
STANDARD DEVIATION
SPECTRA OF KNOWN
PRODUCTS

↓

DETERMINE DISTANCES
OF UNKNOWN PRODUCT
SPECTRUM FROM EXPANDED
STANDARD DEVIATION
SPECTRA

↓

IS
DISTANCE SMALLER
THAN PRESET
VALUE

Y → UNKNOWN PRODUCT
MATCHES KNOWN
PRODUCT

N ↓ UNKNOWN PRODUCT
DOES NOT MATCH
KNOWN PRODUCT